# EUROPEAN PATENT APPLICATION

(11) **EP 1 113 065 A1**
(43) Date of publication of application: **04.07.2001**
(21) Application number: 99907847.0
(22) Date of filing: 03.03.1999
(51) Int. Cl.: C09K 5/06

(54) **HEAT-STORAGE MATERIAL COMPOSITION**

(71) Applicant: MITSUBISHI CHEMICAL CORPORATION, Chiyoda-ku, Tokyo 100-0005 (JP); Mitsubishi Chemical Engineering Corporation, Tokyo 108-0014 (JP)
(72) Inventor: YABE, Masayoshi, Mitsubishi Chemical Corp., Inashiki-gun Ibaraki 300-0332 (JP); KAKIUCHI, Hiroyuki, Mitsubishi Chemical Corp., Inashiki-gun, Ibaraki 300-0332 (JP); YAMAZAKI, Masanori, Mitsubishi Chemical Corp., Inashiki-gun, Ibaraki 300-0332 (JP)
(74) Representative: ter Meer, Nicolaus, Dipl.-Chem., Dr.
(86) International application number: JP9901014
(87) International publication number: WO0052111

(57) **Abstract**

A thermal storage medium composition characterized by comprising three components of (A) trimethylolethane, (B) water and (C) a water-soluble organic compound having at least one unshared electron pair in its molecule.

## Description

### TECHNICAL FIELD

The present invention relates to a thermal storage medium composition. Particularly, it relates to a thermal storage medium composition comprising trimethylolethane and water, which utilizes a phase transition latent heat.

### BACKGROUND ART

A latent heat type thermal storage medium has merits such that as compared with a sensible heat type thermal storage medium, the thermal storage density is high, the phase change temperature is constant, and the heat-withdrawal temperature is stable, and therefore, it is practically employed in various applications. As the main component for such latent heat type thermal storage medium, ice, sodium sulfate decahydrate, calcium chloride hexahydrate and sodium acetate trihydrate are, for example, known. As a typical example of practical application of such a latent heat type thermal storage medium, an ice thermal storage system utilizing midnight electric power may be mentioned.

Further, a thermal storage medium having a phase change temperature within a range of from 20 to 30°C close to the living environmental temperature, is strenuously studied for the purpose of e.g. floor heating or a green house. As its main component, sodium sulfate decahydrate or calcium chloride hexahydrate is employed in many cases, and both of them have a large thermal storage density and can be regarded as inexpensive and excellent raw materials for thermal storage media.

However, if sodium sulfate decahydrate is melted at a temperature of at least its melting point, it will be separated into two phases of anhydrous sodium sulfate and a saturated aqueous solution of sodium sulfate, and if this is solidified, it will not return to sodium sulfate decahydrate except on the surface of the precipitated anhydrous sodium sulfate, whereby there will be a problem that the heat storage amount decreases substantially. This is a phenomenon so-called phase separation, which is caused by the fact that sodium sulfate decahydrate will not completely be solublized in water when melted and will not undergo so-called harmonic melting.

On the other hand, calcium chloride hexahydrate undergoes harmonic melting, but during repeated use, a hydrate of lower degree having a higher melting point will form, and like sodium sulfate decahydrate, an insoluble component will precipitate, whereby there will be a problem again that the thermal storage amount decreases.

As the forgoing hydrate type thermal storage media, it is desired that when melted, they undergo harmonic melting so that they will be completely soluble in water, and no hydrate having a different melting point exists. However, an ideal hydrate type thermal storage medium having such a performance has not been known.

Further, as a thermal storage medium having a phase transition point at a temperature of at most 20°C which is useful for cooling applications, a thermal storage medium composition having a melting temperature of from 8 to 12°C is known which comprises sodium sulfate decahydrate/ammonium chloride/sodium chloride/ammonium sulfate (JP-A-7-48564). This composition has an excellent thermal storage density and safety, but essentially has the above-mentioned problem of phase separation. Accordingly, in order to secure a long-term repetition stability, it is necessary to add e.g. a water-absorptive resin as a phase separation-preventing agent, and it is difficult to completely prevent the phase separation. On the other hand, with a hydrate type thermal storage medium as described above, a so-called super cooling phenomenon will result wherein the medium will not solidify even if cooled to a level below the melting point. Accordingly, it is necessary to take a measure such as addition of various additives for the purpose of suppressing such super cooling.

On the other hand, trimethylolethane (another name: pentaglycerine) is a substance having a melting point of about 200°C, a solid phase transition point of 89°C and having a sublimation property, and as the solid phase transition heat is relatively large at a level of 33.2 cal/g, it is expected to be useful as a thermal storage medium for high temperature use. With respect to its various physical properties, a plurality of reports have been made. For example, Japanese Patent No. 2581708 discloses that a trimethylolethane hydrate has a melting point within a range of from 21 to 35°C. Further, Laugt, M et al have reported that a tetrahydrate of trimethylolethane has a melting point of 29.8°C and a melting latent heat of 185 Kj/Kg
(Powder.Diffr.(1991),6(4),190-193).

### DISCLOSURE OF THE INVENTION

As mentioned above, trimethylolethane can be expected as a thermal storage medium for high temperature use. However, according to the study by the present inventors, with a thermal storage medium comprising trimethylolethane and water, there is a problem that the supercooling phenomenon is substantial, and it can not be used for a long period of time. And, there is no report on the actual practical use. Particularly, for passive thermal storage of domestic waste heat which is generally regarded as low grade, the phase transition point is particularly preferably at a level of from 15 to 20°C, and, for cooling applications, the phase transition point is particularly preferably at most 15°C. The trimethylolethane hydrate is not realistic for either purpose.

Under these circumstances, the object of the present invention is to provide a thermal storage medium composition which is useful as passive thermal storage application or cooling application in the building field, etc. and which has a phase transition point usually at from 0 to 25°C, particularly at from 5 to 20°C, is stable without phase separation and has a high thermal storage density.

In view of the above problems, the present inventors have conducted an extensive study, and as a result, they have found that by adding a water-soluble organic compound having at least one unshared electron pair in its molecule, to a mixture of trimethylolethane and water, the phase transition point of the trimethylolethane/water type thermal storage medium can be adjusted to a desired temperature, and have arrived at the present invention.

Namely, the gist of the present invention relates to a thermal storage medium composition characterized by comprising three components of (A) trimethylolethane, (B) water and (C) a water-soluble organic compound having at least one unshared electron pair in its molecule.

Now, the present invention will be described in detail. The feature of the present invention resides in that a water-soluble organic compound having at least one unshared electron pair in its molecule, other than trimethylolethane, is incorporated to a trimethylolethane/water type composition, to obtain a thermal storage medium composition. Here, the water-soluble organic compound having at least one unshared electron pair in its molecule means an organic compound having at least one group among a hydroxyl group (-OH), an amino group (-NH-), a carbonyl group (-C=O) and a sulfonyl group, which is usually a substituent having a strong hydrogen bond strength, in its molecule. Such a group includes a group having a structure in which the above mentioned groups such as a carboxyl group and an amino group are combined. Such an organic compound is water-soluble, and the solubility is not particularly limited. However, it is preferably a compound which dissolves in an amount of at least 1 g per 100 g of pure water of 25°C.

Specific examples of such a water-soluble organic compound having at least one unshared electron pair in its molecule may be a sugar alcohol such as erythritol, xylitol, mannitol, sorbitol or iditol; an alcohol such as pentaerythritol, myo-inositol, trimethylolpropane, glycerol, ethylene glycol, diethylene glycol, ethanol, sodium L-tartarate or (2-hydroxyethyl) isocyanurate; a phenol such as pyrogallol; an amine such as 1,6-diaminohexane, aniline, 2,4-diamino-6-phenyl-sym-triazine, guanine or pyridine; an amino acid such as glycine, *α* -alanine or *β*-alanine; an amide such as glycine anhydride, alanine anhydride or nicotinic acid amide; melamine; a melamine derivative such as benzoguanamine; urea; a urea derivative such as methyl urea, ethyl urea, butyl urea, dimethyl urea, ethyryl urea, butyryl urea, methanol urea or dimethanol urea; an imide such as succinic acid imide; a ketone such as cyclohexanone; an organic acid such as acetic acid, tartaric acid or stearic acid, and its metal salts; an organic acid ester such as ethyl acetate or dimethyl terephthalate; and a monovalent or bivalent salt of an organic acid, such as sodium acetate, sodium pyrophosphate, sodium malate, calcium succinate or sodium salicylate. Among them, preferred is a compound having both of a carbonyl group and either one of a hydroxyl group and an amino group, in one molecule. From the viewpoint of the safety, economical efficiency, crystallizability or melting point-lowering effect, urea and/or a urea derivative may particularly be mentioned. Further, as preferred specific examples of the compound having a sulfonyl group in its molecule, sodium saccharin, sulfosalicylic acid and sulfolane may be mentioned also taking into such a reason as safety into consideration. Further, from the viewpoint of the safety, economical sufficiency, crystallizability or melting point-lowering effect, the above compounds may be used in a combination of two or more of them.

Now, the composition of the thermal storage medium composition of the present invention is not particularly limited, but, usually, trimethylolethane of component (A) is from 20 to 80 wt%, water of component (B) is from 19 to 50 wt%, and the water-soluble organic compound having at least one unshared electron pair in its molecule of component (C) is from 1 to 50 wt%. Preferably, component (A) is from 30 to 70 wt%, component (B) is from 20 to 40 wt%, and component (C) is from 5 to 40 wt%. If trimethylolethane of component (A) is less than 20%, the absolute amount of trimethylolethane as a hydrate in the composition becomes small, and the thermal storage density tends to be low. On the other hand, if it exceeds 80%, the amount of trimethylolethane precipitated without being dissolved tends to increase, whereby the thermal storage amount tends to decrease. Further, if water of component (B) is less than 19%, the absolute amount of trimethylolethane as a hydrate becomes small, and the thermal storage density tends to be low. On the other hand, if it exceeds 50%, part or whole of the resulting trimethylolethane hydrate is likely to dissolve in water, whereby the thermal storage amount attributable to formation of a hydrate tends to decrease. Further, if the water-soluble organic compound having at least one unshared electron pair in its molecule of component (C) is less than 1%, the effect for adjusting the phase transition point of the trimethylolethane hydrate tends to be small. On the other hand, if it exceeds 50%, the absolute amount of the resulting trimethylolethane hydrate tends to be small, whereby the thermal storage density tends to be low.

Further, the weight ratio (A/B) of component (A) to component (B) is preferably within a range of from 75/25 to 50/50. If the weight ratio exceeds 75/25, the amount of component (A) incapable of forming a hydrate tends to increase, whereby the thermal storage density tends to be low. On the other hand, if it is less than 50/50, part or whole of the formed hydrate of (A) will be dissolved in excess water, and the thermal storage amount attributable to formation of a hydrate tends to decrease.

The thermal storage medium composition of the present invention as described above, has a phase transition point showing the maximum latent heat usually within a range of from 0 to 25°C, preferably within a range of from 5 to 20°C. However, the present invention is not limited to such a specific range. If the phase transition point showing the maximum latent heat is less than 0°C, such will go beyond a usually available category of waste cold heat. On the other hand, if the phase transition point showing the maximum latent heat exceeds 25°C, thermal storage can not be accomplished in a short period of time at a usually available environmental temperature. Further, for an air cooling system, if the thermal storage temperature is lower than 0°C, it will be required to employ an antifreezing fluid as a cold heat transfer medium, and further it will be required to employ a special machine as a refrigerating machine to supply cold heat, whereby the efficiency will be low as compared with a usual machine.

Trimethylolethane in the thermal storage medium composition of the present invention has three hydroxyl groups in a high density within its molecule, whereby usually, strong hydrogen bond strength serves to form a stable tetrahydrate crystal. Further, the nature such that even if trimethylolethane is dissociated from water at a temperature of at least the melting point, it is readily soluble and easily dissolves in water, is very important, as it will be the cause for no phase separation in a thermal storage medium to be used by repetition of solidification and melting. Further, if a substance having a high hydrogen bond strength is used as a third component in combination therewith, it is assumed that such a third component will thrust into the crystal structure of trimethylolethane and water to change the structure, whereby it is possible to lower the melting point of the trimethylolethane. And, such a third component corresponds to the water-soluble organic compound having an unshared electron pair. Further, such a water-soluble organic compound having an unshared electron pair is highly compatible with water and trimethylol, and its hydrogen bond strength is particularly preferred, and the most typical one may, for example, be urea and/or a urea derivative, which is water-soluble and has an amide bond.

Further, with the thermal storage medium composition of the present invention, in some cases, it is possible that a problem of so-called super cooling will result such that it will not crystallize even if cooled to a temperature lower than the phase transition point. To prevent this, a component having a function as a supercooling-preventing agent, may be incorporated, as the case requires.

Preferred as a supercooling-preventing agent useful in the present invention is an inorganic salt and/or an inorganic hydrate. Such an inorganic salt or an inorganic hydrate is not particularly limited. However, for example, one wherein the cation portion is a monovalent or bivalent metal ion is preferred. Specifically, sodium carbonate, sodium carbonate monohydrate, sodium pyrophosphate, sodium pyrophosphate decahydrate, calcium sulfate, calcium sulfate hemihydrate, calcium sulfate dihydrate or calcium tertiary phosphate may, for example, be mentioned. Among them, sodium carbonate, sodium carbonate monohydrate, calcium sulfate hemihydrate or calcium sulfate dihydrate is preferred, although not limited thereto. Further, two or more inorganic salts and/or inorganic hydrates may be used in combination. When such an inorganic salt or an inorganic hydrate is used, supercooling of the main component of the thermal storage medium can effectively be prevented, and it is used usually in an amount of from 0.1 to 10 parts by weight, preferably from 0.5 to 5 parts by weight, per 100 parts by weight of the main component comprising trimethylolethane and water. If the amount of the inorganic salt and/or the inorganic hydrate is smaller than 0.1 part by weight, no adequate effect for preventing supercooling can be obtained, and if it exceeds 10 parts by weight, the thermal storage amount tends to be small, such being undesirable.

Further, the thermal storage medium composition of the present invention may contain a thickner, as the case requires. The thickner may, for example, be a water-insoluble water-absorbing polymer, sodium polyacrylate, polyacrylamide, polyglycerol, carboxymethylcellulose, hydroxyethylcellulose, polyvinylalcohol, an alginate, xanthan gum, garaginan, gelatin or agar, but is not limited thereto. The amount of such a thickner is usually from 0.1 to 5 parts by weight per 100 parts by weight of the total amount of the three components (A) to (C) of the thermal storage medium composition. Further, to the thermal storage medium composition of the present invention, an antioxidant such as a phenol, an amine or a hydroxylamine, a metal corrosion-preventing agent such as a chromate, a polyphosphate or sodium nitrite, or an antiseptic such as sodium benzoate or 2,6-di-t-butylhydroxytoluene may be incorporated.

The method for preparing the thermal storage medium composition of the present invention as described in the forgoing, is not particularly limited, and known various mixing methods may be employed, and components (A), (B) and (C), if necessary, together with the above mentioned other additives, may be uniformly mixed. As an example, a method of heating the thermal storage medium composition to a temperature of from 40 to 50°C, followed by stirring and mixing, may be mentioned. As a method for using the thermal storage medium composition of the present invention, there may be mentioned, for example, a capsule type having the thermal storage medium composition filled in a thermal storage container or a shell and tube type which requires no thermal storage container. The capsule type can be obtained by injecting the thermal storage medium composition into a thermal storage container such as a capsule and then sealing the thermal storage container. The material for the capsule may, for example, be a metal such as iron or aluminum, or a plastic such as high density polyethylene or polypropylene, or polycarbonate. High density polyethylene is preferred. The shape of the capsule is not particularly limited, and, for example, a spherical shape, a plate shape, a pipe shape, a constricted cylinder shape, a twin valve shape or a corrugated plate shape may be mentioned. It will be suitably selected depending upon the particular application. The shell and tube type is a method wherein the thermal storage medium composition of the present invention is packed in the shell side and a heat medium such as water or an antifreezing fluid is circulated in the tube side to freeze the thermal storage medium around the tube.

Now, an apparatus employing the thermal storage medium composition will specifically be described with reference to the drawings.

Figure 1 is a flow chart showing an embodiment of the thermal storage apparatus of the present invention. In Figure 1, the thermal storage apparatus 1 has a thermal storage tank 2 which accommodates a thermal storage medium and which performs heat exchange via a heat transfer wall. The type of the thermal storage tank 2 is not particularly limited, but a capsule type or a shell and tube type is suitable. As shown in Figure 2, the capsule type thermal storage tank 2 has perforated plates 6a and 6b partitioning the interior of a drum 5 having an inlet/outlet 3a for a heating medium and another inlet/outlet 3b, and in an inside thermal storage chamber 7 defined by the perforated plates 6a and 6b, capsules 8 formed of a heat transfer wall material are randomly packed. In the capsules 8, a thermal storage medium is accommodated.

Accordingly, when a heating medium is supplied from the heating medium inlet/outlet 3a, the heating medium will pass through the perforated plate 6a, enter the thermal storage chamber 7 and pass through the clearance among the capsules 8 and 8. During this process, heat exchange is carried out between the heating medium and the thermal storage medium, so that the thermal storage medium may absorb to store a heat energy or may radiate heat. The heat-exchanged heating medium will be supplied' to another system via the perforated plate 6b and another heating medium inlet/outlet pipe 3b. As shown in Figure 3, a shell and tube type has a tank body 10, and in the tank body 10, a main pipe 11 extends from an inlet/outlet 3a for the heating medium. To the main pipe 11, many branch pipes 12, 12 are connected, and the other ends of the branch pipes 12, 12 are connected to a main pipe 13 on another inlet/outlet side, so that the heating medium will be supplied to another system from another heating medium inlet/outlet 3b. The above mentioned main pipes 11 and 13 and branch pipes 12, 12, are formed of a heat transfer wall material, and in a thermal storage chamber 7 outside of the main pipes 11 and 13 and branch pipes 12, 12, a thermal storage medium is filled. The thermal storage tank 2 and the heat source apparatus 15 form a loop via valves 16, 17 and 18 and a pump 19, so that by driving the pump 19, the heat energy acquired by the heat source apparatus 15 can be stored in the thermal storage tank 2.

Further, the thermal storage apparatus 1 has a heat exchanger 20 and is constructed so that it will heat exchange with a heating medium introduced from a heating medium flow path 21. The heat exchanger 20 and the thermal storage tank 2 are constructed to form a loop via a valve 17, a three-way valve 22, a pump 23 and a valve 18, so that by driving the pump 23, the heating medium heat-exchanged by the thermal storage tank 2 is supplied to the heat exchanger 20 and will be heat-exchanged with a heating medium introduced from 21. Further, the three-way valve 22 is a valve to adjust the mixing ratio of the heating medium sent from the thermal storage tank 2 to the heating medium returned from the heat exchanger 20 through a bypass pipe 24, and it is used for adjusting the temperature of the heat exchanger 20.

### BRIEF DESCRIPTION OF THE DRAWINGS

Figure 1 is a flow chart showing an embodiment of the thermal storage apparatus of the present invention.

Figure 2 is a vertical cross-sectional view showing an embodiment of a capsule type thermal storage tank.

Figure 3 is a vertical cross-sectional view showing an embodiment of a shell and tube type thermal storage tank.

The meanings of the symbols shown in Figures 1 to 3 will be given below.
1: Thermal storage apparatus
2: Thermal storage tank
8: Heat transfer wall
15: Heat source apparatus
19, 23: Pumps
16, 17, 18, 23: Valves
20: Heat exchanger
22: Three-way valve

### BEST MODE FOR CARRYING OUT THE INVENTION

Now, the present invention will be described in further detail with reference to Examples, but the present invention is not limited by the following Examples, unless the description goes beyond the gist of the invention.

### EXAMPLE 1

42 g of trimethylolethane (reagent, manufactured by Tokyo Kasei Kogyo K.K.), 28 g of pure water and 30 g of urea (reagent, manufactured by Kishida Kagaku K.K.) were stirred and mixed at 40°C. The obtained thermal storage medium composition of a colorless transparent uniform solution state was cooled to -50°C at 10°C/min and heated to 40°C at 2°C/min by a differential scanning calorimeter (DSC210, manufactured by Seiko Denshi Kogyo K.K.), whereby the melting peak temperature (melting point) and the latent heat of melting were measured. As a result, the melting point was 14.4°C, and the latent heat of melting was 160 J/g.

### EXAMPLE 2

44 g of trimethylolethane, 36 g of pure water and 20 g of 1,3-dimethylurea (reagent, manufactured by Wako Junyaku K.K.) were stirred and mixed at 60°C. The obtained thermal storage medium composition of a colorless uniform solution state was cooled to -50°C at 10°C/min and heated to 40°C at 2°C/min by a differential scanning calorimeter (DSC210, manufactured by Seiko Denshi Kogyo K.K.), whereby the melting peak temperature (melting point) and the latent heat of melting were measured. As a result, the melting point was 18.7°C, and the latent heat of melting was 105 J/g.

### EXAMPLE 3

44 g of trimethylolethane, 36 g of pure water and 20 g of methylurea (reagent, manufactured by Wako Junyaku K.K.) were stirred and mixed at 40°C. The obtained thermal storage medium composition of a colorless transparent uniform liquid state was cooled to -50°C at 10°C/min and heated to 40°C at 2°C/min by a differential scanning calorimeter (DSC210, manufactured by Seiko Denshi Kogyo K.K.), whereby the melting peak temperature (melting point) and the latent heat of melting were measured. As a result, the melting point was 17.6°C, and the latent heat of melting was 97 J/g.

### EXAMPLE 4

42 g of trimethylolethane, 28 g of pure water and 30 g of urea were stirred and mixed at 40°C. The obtained thermal storage medium composition of a colorless transparent uniform solution state was filled in a spherical capsule made of polyethylene having an inner diameter of 64 mm, and in a constant temperature water tank, solidification/melting from 5°C to 20°C was repeated 50 times, whereby no change was observed in the thermal storage and discharge characteristics as between the first time and the 50th time, and the solution after the test was a uniform transparent solution. This results indicates that the thermal storage medium composition of the present invention is a stable thermal storage medium free from a problem of phase separation. Further, the melting initiation temperature was constant at 14°C.

### EXAMPLE 5

44 g of trimethylolethane (reagent, manufactured by Tokyo Kasei Kogyo K.K.), 36 g of pure water and 20 g of sulfosalicylic acid dihydrate (reagent, manufactured by Wako Junyaku K.K.) were stirred and mixed at 40°C. The obtained thermal storage medium composition of a colorless transparent uniform solution state was cooled to -50°C at 10°C/min and heated to 40°C at 2°C/min by a differential scanning calorimeter (DSC210, manufactured by Seiko Denshi Kogyo K.K.), whereby the latent heat of melting and the melting peak temperature were measured. As a result, the melting point was 19.9°C, and the latent heat of melting was 100 J/g.

### EXAMPLE 6

38.5 g of trimethylolethane (reagent, manufactured by Tokyo Kasei Kogyo K.K.), 31.5 g of pure water and 30 g of sulfolane (reagent, manufactured by Wako Junyaku K.K.) were stirred and mixed at 40°C. The obtained thermal storage medium composition of a colorless transparent uniform solution state was cooled to -50°C at 10°C/min and heated to 40°C at 2°C/min by a differential scanning calorimeter (DSC210, manufactured by Seiko Denshi Kogyo K.K.), whereby the latent heat of melting and the melting peak temperature were measured. As a result, the melting point was 20.0°C, and the latent heat of melting was 120 J/g.

### EXAMPLE 7

44 g of trimethylolethane (reagent, manufactured by Tokyo Kasei Kogyo K.K.), 36 g of pure water and 20 g of sodium saccharin (reagent, manufactured by Wako Junyaku K.K.) were stirred and mixed at 40°C. The obtained thermal storage medium composition of a colorless transparent uniform solution state was cooled to -50°C at 10°C/min and heated to 40°C at 2°C/min by a differential scanning calorimeter (DSC210, manufactured by Seiko Denshi Kogyo K.K.), whereby the latent heat of melting and the melting peak temperature were measured. As a result, the melting point was 22.6°C, and the latent heat of melting was 140 J/g.

### EXAMPLE 8

The thermal storage medium composition of a colorless transparent uniform solution state obtained in Example 1, was filled in a spherical capsule made of polyethylene having an inner diameter of 64 mm, and in a constant temperature water tank, solidification/melting from 10°C to 30°C was repeated 50 times, whereby no change was observed in the thermal storage and discharge characteristics between the first time and the 50th time, and the solution after the test was a uniform transparent solution. This result indicates that the thermal storage medium composition of the present invention is a stable thermal storage medium free from a problem of phase separation. Further, the melting initiation temperature was constant at 19°C.

### COMPARATIVE EXAMPLE 1

The operation was carried out in the same manner as in Example 1 except that sulfosalicylic acid dihydrate was omitted. As a result, the melting point was 29.7°C, and the latent heat of melting was 180 J/g.

### EXAMPLE 9

200 g of trimethylolethane (reagent, manufactured by Tokyo Kasei Kogyo K.K.), 143 g of pure water and 157 g of urea (reagent, manufactured by Kishida Kagaku K.K.) were stirred and mixed at 40°C to obtain a uniform solution, and 50 g of the solution was poured into a 50 ml sample bottle. Further, 1.5 g of guanine (reagent, manufactured by Tokyo Kasei Kogyo K.K.) was stirred and mixed. A cover was put on the top of the container, and a thermocouple was mounted so that the forward end was located at the center of the container with a distance of about 1 cm from the bottom of the sample bottle. A solidification/melting operation was carried out in a constant temperature tank capable of repeating maintaining the lowest temperature of 5°C for 10 hours and maintaining the highest temperature of 20°C for 6 hours, and at the same time, the thermocouple temperature was monitored. At that time, the temperature at which the melting state turned into a cooling state and supercooling was broken, was taken as a crystallization temperature, and the crystallization temperatures at the 5th and 20th repetition were taken as indices of supercooling-preventive effects. Here, as the thermocouple, T-model thermocouple (JIS 0.75 class) manufactured by Kabushikikaisha Chuo Riken, was used. The results are shown in Table 1.

### EXAMPLES 10 to 15

The evaluation was carried out in the same manner as in Example 1 except that instead of guanine in Example 9, the same amount of the compound as identified in Table 1 was added, and the results are shown in Table 1.

### EXAMPLE 16

The evaluation was carried out in the same manner as in Example 1 except that in Example 9, guanine was not added. As a result, no crystallization took place under this condition.

**Table 1**

| | Added component | Crystallization initiation temperature (°C) | |
|---|---|---|---|
| | | 5th repetition | 20th repetition |
| Ex. 9 | Guanine | 13.0 | 12.0 |
| Ex. 10 | EDTA calcium disodium tetraacetate | 10.1 | 8.9 |
| Ex. 11 | Melamine | 8.7 | 8.5 |
| Ex. 12 | 2,4-Diamino-6-phenyl-syùtriazine | 11.3 | 8.6 |
| Ex. 13 | Calcium stearate | 12.3 | 12.0 |
| Ex. 14 | Iron stearate | 12.8 | 11.5 |
| Ex. 15 | Glycerol fatty acid ester (HLB3.8) | 12.1 | 12.3 |
| Ex. 16 | Nil | - | - |

### INDUSTRIAL APPLICABILITY

The thermal storage medium composition of the present invention has a phase transition point within a range of from 0 to 25°C in the vicinity of room temperature, particularly within a range of from 5 to 20°C, has a large thermal storage density and is excellent in repetition stability and free from phase separation. Accordingly, it can be used suitably as a passive thermal storage medium or a cold storage medium in the building field, etc.

## Claims

1. A thermal storage medium composition characterized by comprising three components of (A) trimethylolethane, (B) water and (C) a water-soluble organic compound having at least one unshared electron pair in its molecule.

2. The thermal storage medium composition according to Claim 1, which has at least one group among a hydroxyl group, an amino group, a carbonyl group and a sulfonyl group, in the molecule of component (C).

3. The thermal storage medium composition according to Claim 1 or 2, wherein component (A) is from 20 to 80 wt%, component (B) is from 19 to 50 wt%, and component (C) is from 1 to 50 wt%.

4. The thermal storage medium composition according to any one of Claims 1 to 3, characterized in that the weight ratio (A/B) of component (A) to component (B) is from 75/25 to 50/50.

5. The thermal storage medium composition according to any one of Claims 1 to 4, which has a phase transition point of from 0 to 25°C.

6. The thermal storage medium composition according to any one of Claims 1 to 5, which has a phase transition point of from 5 to 20°C.

7. The thermal storage medium composition according to any one of Claims 1 to 6, wherein component (C) is sodium saccharin, sulfosalicylic acid or sulfolane.

8. The thermal storage medium composition according to any one of Claims 1 to 6, wherein component (C) is urea and/or a urea derivative.

9. The thermal storage medium composition according to any one of Claims 1 to 8, which contains an inorganic salt and/or an inorganic hydrate.
